# EUROPEAN PATENT APPLICATION

(11) **EP 3 865 597 A1**
(43) Date of publication of application: **18.08.2021**
(21) Application number: 20212616.5
(22) Date of filing: 09.12.2020
(51) Int. Cl.: C22B 3/08, C22B 15/00, C25C 1/08, C25C 1/12, C22B 3/22, C22B 3/00, C22B 7/00, C22B 11/00

(54) **PROCESS FOR SEPARATING NOBLE METALS FROM A CO-, NI- AND/OR CU-BASED METAL ALLOY**

(30) Priority: 17.12.2019 EP 19216834
(71) Applicant: Umicore, 1000 Brussels (BE)
(72) Inventor: OOSTERHOF, Harald, deceased (BE); PEELMAN, Sebastiaan, 2250 Olen (BE)
(74) Representative: Umicore RDI Patent Department

(57) **Abstract**

The present invention provides a process for separating noble metals from a Co-, Ni- and/or Cu-based metal alloy, comprising the steps of: a. providing alloy particles comprising (i) Co, Ni and/or Cu, and (ii) at least one noble metal; b. reacting Co, Ni and/or Cu in said alloy particles with an oxidizing agent in an acidic aqueous solution, thereby obtaining (i) a Co-, Ni- and/or Cu-rich leach solution, and (ii) a noble metal-rich residue having a reduced Co-, Ni- and/or Cu-content; and c. separating said Co-, Ni- and/or Cu-rich leach solution from said noble metal-rich residue; characterized in that said oxidizing agent comprises ferric iron, whereby said ferric iron is provided in a stoichiometric excess relative to the total amount of Co, Ni and Cu in said alloy particles.

## Description

### TECHNICAL FIELD

The present invention relates to improved processes for separating noble metals from base metal alloys comprising cobalt, nickel and/or copper. The invention relates specifically to the selective recovery of noble metals such as silver and gold from alloys comprising cobalt, nickel and/or copper.

### INTRODUCTION

Smelting processes applied to copper-bearing primary or secondary materials typically end up producing a copper-based phase, most often a sulphidic phase called matte, or else a metallic alloy. Appreciable amounts of other metals are collected in this phase, in particular the noble metals present in the feed.

Such a copper-based phase is then subjected to a number of further process steps in order to recover the noble metals rapidly and with high yield. It is also essential to purify the copper.

According to known processes, copper-based mattes or alloys are finely ground, and leached in sulphuric acid under oxidizing conditions. Noble metals remain in a residue, which is separated by decantation and/or filtration. The leachate is then processed in an electrowinning plant to recover copper in the form of cathodes.

When dealing with alloys, oxygen is typically chosen as oxidizing agent as it is readily available. The copper is leached according to the reaction:

Cu + H₂SO₄ + ½ O₂ → Cu²⁺ + SO₄²⁻ + H₂O (I)

During electrowinning, sulphuric acid is regenerated at the anode. This highly acidic and copper-depleted spent electrolyte can then be recirculated to the leaching step. However, a bleed must be incorporated to prevent accumulation of Ni and Co in the electrolyte.

Less is known on the possibility to apply a similar process to alloys comprising noble metals such as silver and gold. GB1476217 discloses a process wherein a metal alloy is melted and converted into fine granules by introducing it into water. At the same time, the formation of C_{U2}O precipitations is affected. The large surface area of at least 1000 cm²/cm³ and the CU₂O precipitations are essential for the subsequent oxidative leaching step. Using oxygen as oxidizing agent, copper and other non-ferrous metals are then leached from the grains. The insoluble residue comprising the noble metal is sifted. The siftings can be compacted into anodes and passed on to noble-metal electrolysis.

In such a process, the step of oxidative leaching is typically performed with acid, under rather aggressive conditions of temperature, oxygen pressure and acidity. Such processes are highly energy-intensive. As a consequence, such conditions do not allow for a straightforward measurement of the redox potential, which is a crucial parameter to determine the endpoint of the reaction and hence ensure a sufficient purity of the obtained products. Present technologies result in an unacceptable amount of noble metal(s) in the cathodes. Hence, a higher purity of the obtained noble metal as well as a higher purity of the cathode material obtained in the electrowinning step are desirable. Choi et al (1991) reported that silver does not dissolve in the sulfuric acid during oxidative leaching using oxygen as oxidizing agent if the concentration of Fe³⁺ is lower than 0.01 M, and the leaching process is thus selective towards copper. In such systems, catalytic amounts of ferric iron were used, whereas oxygen was employed as oxidizing agent. Quinet showed that even at higher concentrations (0.015 M) of Fe³⁺, the oxidation reaction in presence of oxygen is not sufficient and concluded that the addition of H₂O₂ is mandatory to arrive at satisfactory copper leaching yields, at the expense of selectivity. Indeed, also a high amount of silver was leached. Quinet, P. Minerals & Metallurgical Processing February 2005, Vol. 22, No.1, pages 17 to 22. It is thus an object of the present invention to provide a leaching process which yields satisfactory base metal leaching and a high selectivity towards the base metal in the metal alloy.

Likewise, the purification of noble metal alloys comprising cobalt and/or nickel is poorly understood. Furthermore, most of the reported processes comprise one or more batch process steps, making the entire process unsuitable for continuous operation. Present processes also suffer from a narrow processing window, which causes minor variations in process conditions to result in large variations in noble metal purity and/or purity of the cathode materials. A more robust process is therefore desired.

### SUMMARY OF THE INVENTION

The current invention provides in a solution for at least one of the above-mentioned problems by providing a process for separating noble metals from a Co-, Ni- and/or Cu-based metal alloy, as described in claim 1.

The inventors have now found that the use of ferric iron (Fe³⁺) as oxidation agent allows for higher purity of the noble metal in the obtained noble metal rich residue. At the same time, the process requires less energy. Ferric iron as oxidizing agent appears to be selective towards base metals, such as copper. No significant amount of noble metal, such as silver, is leached. For example, it was found that silver dissolution in the leachate phase can readily be limited to below 1 mg/L, while maintaining high Cu yields. This removes the criticality of the end-point detection entirely. Moreover, aggressive circumstances are unnecessary when using ferric iron, as the leaching kinetics are satisfactory even at temperatures well below the atmospheric boiling point of the leachate. Also, high oxygen pressure in the reaction medium is not required, eliminating the use of a high-pressure autoclave.

### DETAILED DESCRIPTION OF THE INVENTION

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1 % or less of and from the specified value, in so far such variations are appropriate to perform in the disclosed invention. However, it is to be understood that the value to which the modifier "about" refers is itself also specifically disclosed.

"Comprise," "comprising," and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints. All percentages are to be understood as percentage by weight, abbreviated as "wt.%" or as volume per cent, abbreviated as "vol.%", unless otherwise defined or unless a different meaning is obvious to the person skilled in the art from its use and in the context wherein it is used.

### Process

In a first aspect, the present invention provides a process for separating noble metals from a Co-, Ni- and/or Cu-based metal alloy, comprising the steps of:
a. providing alloy particles comprising (i) Co, Ni and/or Cu, and (ii) at least one noble metal;
b. reacting Co, Ni and/or Cu in said alloy particles with an oxidizing agent in an acidic aqueous solution, thereby obtaining (i) a Co-, Ni- and/or Cu-rich leach solution, and (ii) a noble metal-rich residue having a reduced Co-, Ni- and/or Cu-content; and,
c. separating said Co-, Ni- and/or Cu-rich leach solution from said noble metal-rich residue,
wherein Co, Ni and/or Cu in said alloy particles is reacted with an oxidation agent in an acidic aqueous solution, preferably in a sulphuric acid solution. Said oxidation agent comprises ferric iron. Preferably, said oxidation agent consists essentially of ferric iron. This means that said Co, Ni and/or Cu in said alloy particles are not reacted with any further oxidation agents such as oxygen and/or hydrogen peroxide. Preferably, no additional oxidizing agent is added to said acidic aqueous solution. Preferably, no oxidizing agent having a stronger oxidizing power than ferric iron is added to said acidic aqueous solution. Preferably, no oxygen and/or hydrogen peroxide is added to said acidic aqueous solution. Preferably, said Co, Ni and/or Cu in said alloy particles are reacted with said oxidizing agent without addition of oxygen and hydrogen peroxide as oxidizing agents In the context of the present invention, this means that no air or oxygen is dispersed through the acidic aqueous solution and/or that no hydrogen peroxide is added to the acidic aqueous solution before or during the oxidation reaction. Ferric iron is provided preferably in a stoichiometric excess relatively to the total amount of Co, Ni and Cu. Said alloy particles may be prepared through granulation, powdering or atomization of said Co-, Ni- and/or Cu-based metal alloy. Oxidizing Co, Ni and/or Cu in said alloy particles in an acidic aqueous solution, preferably in a sulphuric acid solution, occurs according to the reaction:

Co + 2 Fe³⁺ → Co²⁺ + 2 Fe²⁺ (II-a)

Ni + 2 Fe³⁺ → Ni²⁺ + 2 Fe²⁺ (II-b)

Cu + 2 Fe³⁺ → Cu²⁺ + 2 Fe²⁺ (II-c)

Without being bound to any mechanistic considerations, the inventors contemplate that oxygen from air or pure oxygen does not allow for a selective oxidation of base metals in the alloys from noble metals. The inventors have now found that a quantitative and selective oxidation of the base metals in the metal alloy can be obtained provided that the oxidation reaction is performed by ferric iron when added in a stoichiometric excess relative to the total amount of base metals. The absence of stronger oxidation agents, as determined under standard conditions, such as oxygen and hydrogen peroxide, is thus preferred. The absence of further oxidation agents is also preferred.

Said Co-, Ni- and/or Cu-rich leach solution may be separated from said noble metal-rich residue by filtration or decantation.

The inventors have found that the use of ferric iron as oxidation agent allows for higher purity of the noble metal in the obtained noble metal rich residue. More specifically, no further oxidation agents such as air, oxygen or hydrogen peroxide are added to the acidic aqueous solution, either before the start of the reaction or during the reaction. Ferric iron as oxidizing agent was found to be more selective towards base metals, such as copper. No significant amount of noble metal, such as silver, is leached. For example, it was found that silver dissolution in the leachate phase can readily be limited to below 1 mg/L. This removes the criticality of the endpoint detection entirely. In addition, it was observed that metallic Ni and Co are leached faster when oxidized in presence of iron (III) compared to when oxidized by oxygen.

Another advantage of the present invention is that the cathode material recovered in the electrowinning step has a sufficiently high purity grade to allow further industrial use without additional purification process steps. Equally important is that the loss of noble metal materials at the recovered cathode material is strongly suppressed. Both aspects make the new process economically more interesting.

At the same time, the process requires less energy and aggressive circumstances are unnecessary when using ferric iron as an oxidation agent, as the leaching kinetics are satisfactory even at temperatures well below the atmospheric boiling point of the leachate. Thus, high oxygen pressure in the reaction medium is not required.

Interestingly, the iron can also play a key role in the Co, Ni and/or Cu electrowinning process during processing of the Co-, Ni- and/or Cu-comprising leachate solution. Indeed, the iron (II) resulting from the leaching step is prone to re-oxidation to iron (III) at the anode. Contrary to a classic electrowinning process, oxidation of water at the anode is hereby suppressed, and hence also the generation of oxygen gas. This solves a further problem, as the oxygen tends to form bubbles, which upon bursting at the surface of the electrolyte bath give rise to acidic mist. Thus, the process according to the first aspect of the invention is not subject to acid mist formation, rendering a process which is much safer for operators.

Furthermore, the process can be easily controlled by controlling the flow rate of ferric iron and alloy particles depending on the quality of the feed alloy material.

Granulation or powdering methods comprise, but are not limited to: mechanical methods such as milling, grinding or comminution, and rapid solidification methods such as granulation, powdering or atomization. The term "particle" as used in the context of the present invention is to be understood as synonymous to "granule," "granular material," "powder," and "particulate." The preferred particle size distribution is characterized by a d₅₀ of less than 500 µm, as determined according to ASTM E11, and more preferably by a d₅₀ of less than 250 µm.

In a preferred embodiment, the invention provides a process according to the first aspect, whereby said acidic aqueous solution is an aqueous acidic solution comprising ferric iron and sulphuric acid.

In a preferred embodiment, the invention provides a process according to the first aspect, whereby a molar ratio of said ferric iron to a total amount of Co, Ni and Cu in said alloy particles is between 2.1 and 5.0, preferably between 2.2 and 3.0 and more preferably between 2.25 and 2.75. Most preferably, said molar ratio of said ferric iron to a total amount of Co, Ni and Cu in said alloy particles is about 2.25, 2.30, 2.35, 2.40, 2.45, 2.50, 2.55, 2.60, 2.65, 2.70, 2.75 or any value there in between. At such ratios, it was found that the Co, Ni and/or Cu oxidation kinetics are fast. Higher excesses of ferric iron should be avoided to avoid too large excesses of ferric iron being present in the Co-, Ni- and/or Cu-rich leach solution. Residual iron (III) in the leachate is preferably avoided as it may induce side reactions in the electrowinning process.

In a preferred embodiment, the invention provides a process according to the first aspect, whereby ferric iron and sulphuric acid are comprised in said acidic aqueous solution in a molar ratio ferric iron to sulphuric acid of 0.1 to 0.5, preferably of 0.1 to 0.3 and more preferably of 0.15 to 0.25. Preferably, said acidic aqueous solution comprises sulphuric acid in a concentration between 1.0 and 3.0 M, more preferably between 1.2 and 2.5 M, and even more preferably between 1.5 and 2.2 M. Most preferably, said acidic aqueous solution comprises sulphuric acid in a concentration of 1.6, 1.8, 2.0 M, or any value there in between. Preferably, said acidic aqueous solution comprises ferric iron in a concentration between 0.1 and 1.0 M, more preferably between 0.2 and 0.7 M, and even more preferably between 0.3 and 0.5 M. Most preferably, said acidic aqueous solution comprises ferric iron in a concentration of 0.30, 0.35, 0.40, 0.45 M, or any value there in between.

In a preferred embodiment, the invention provides a process according to the first aspect, wherein said alloy particles comprise Co, Ni and/or Cu in amount of at least 50 wt.% (i.e. Co-, Ni- and/or Cu-based), relative to the total weight of said alloy, and one or more noble metals in an amount of at most 50 wt.%, relative to the total weight of said alloy. Preferably, said alloy comprises Co, Ni and/or Cu in amount of at least 60 wt.%, at least 70 wt.%, at least 75 wt.%, or even at least 80 wt.%, and said alloy comprises one or more noble metals in an amount of at most 40 wt.%, at most 30 wt.%, at most 25 wt.%, or even at most 20 wt.%, relative to the total weight of said alloy. In a most preferred embodiment, said alloy comprises Co, Ni and/or Cu in amount of at least 85 wt.% and one or more noble metals in an amount of at most 15 wt.%, and preferably in an amount of at most 10 wt.%. The alloy may further comprise impurities, such as - but not limited to - As, Bi, Pb, Se and Te. In a more preferred embodiment, said alloy particles are obtained from comminuting waste battery materials, especially waste battery materials comprising Ni and/or Co, electronic scrap materials, and/or metallurgical phases such as matte and speiss.

In a preferred embodiment, the invention provides a process according to the first aspect, wherein said ferric iron is provided in step b. in a stoichiometric excess relative to the total amount of Co, Ni and Cu in said alloy particles. This allows for a complete oxidation and subsequent dissolution of Co, Ni and Cu in said alloy particles.

In a more preferred embodiment, the molar ratio of said ferric iron provided in step b. to the total amount of Co, Ni and Cu in said alloy particles is higher than 2.0, more preferably higher than 2.1, higher than 2.2, higher than 2.3, or even higher than 2.4. Higher molar ratios allow for faster oxidation kinetics. Also, the molar ratio of said ferric iron provided in step b. to the total amount of Co, Ni and Cu in said alloy particles is preferably not higher than 20, and more preferably not higher than 10. Most preferably, said molar ratio is about 2.5, 3.0, 4.0, 5.0 or any value there in between. At such ratios, it was found that the Co, Ni and/or Cu oxidation kinetics are very fast resulting in a complete oxidation within minutes at a mild temperature of about 50 °C. Even higher ratios yield merely marginal gains in oxidation kinetics. Ultra-fast oxidation kinetics (that is, quantitative oxidation of all Co, Ni and/or Cu in said alloy particles within less than 15 minutes) allows for the design of a continuous leaching process without the requirement of large leaching reactors.

In a first embodiment, the invention provides a process according to the first aspect, wherein said process is a two-step process. Towards the beginning of the leaching reaction of e.g. a copper alloy comprising a fraction of silver, a first redox potential of more than 200 mV (and, preferably, below 400 mV) versus Ag/AgCI is usefully maintained to ensure good leaching kinetics. This can be achieved by having, in an initial phase of the contacting step, a stoichiometric excess of iron (III) in the aqueous solution. Towards the end of the leaching reaction, a second redox potential of less than 200 mV (and, preferably, above 150 mV) is usefully maintained. This can be achieved by adding, in a final phase of the contacting step, a further amount of alloy, while monitoring the redox potential. The concentration of iron (III) is thereby minimized in the leachate. This will ensure that iron (III) is utilized to its full potential during leaching. When applying this two-phase leaching procedure, fast kinetics are obtained, while the selectivity is such that the leachate contains less than 10 mg/L of noble metals, preferably less than 5 mg/L of noble metals and even less than 1 mg/L of noble metals; and the noble metal residue contains less than 10 wt.% of Co, Ni and/or Cu, preferably less than 5 wt.%.

In an alternative embodiment, the invention provides a process according to the first aspect, wherein said process is a continuous process. Most preferred is that the process is a continuous process.

### Fluidised bed process

A fluidised bed reactor is a type of reactor device that can be used to carry out a variety of multiphase chemical reactions. In the context of the present invention, a liquid phase comprising ferric iron in an aqueous acidic solution is passed through a bed of solid particle material consisting of a noble metal alloy comprising Co, Ni and/or Cu. The liquid phase is passed through the reactor at velocities high enough to suspend and entrain the noble metal-enriched particles. The alloy particle material in the fluidised bed reactor may be supported by a porous plate, known as a distributor. The fluid is then forced through the distributor up through the solid particle material. At operational fluid velocities, the unreacted alloy particle material remains in place as the fluid passes through the voids in the material. As Co, Ni and/or Cu in the alloy particle material reacts with the ferric iron, the size and weight of the particles decease. This allows the flow of the fluid to pick up and suspend these particles. The reactor is now a fluidised bed. The reacted noble metal-enriched particles or residue is entrained with the fluid. As such, the inventors contemplated an atypical use for a fluidised bed reactor.

In a preferred embodiment, the invention provides a process according to the first aspect, wherein said alloy particle is reacted with ferric iron in an acidic aqueous solution in a fluidised bed reactor, preferably in a reaction zone of said fluidised bed reactor. As such, the inventors contemplated the process according to the first aspect of the invention in a fluidised bed reactor and realised the separation of the noble metal-rich residue from the unreacted alloy particles by selective fluidisation and entrainment of the noble metal-rich residue and subsequent evacuation thereof in an overflow section of the fluidised bed reactor. This allows for setting up a fully continuous process.

In a preferred embodiment, said fluidised bed reactor comprises a reaction zone, a calming zone and an overflow zone. In a preferred embodiment, said fluidised bed reactor is a continuous type reactor. The fluidised bed reactor has preferably a vertical tubular structure, optionally with a varying cross-sectional area, such that the cross section of the proximal end, which houses the overflow zone, is smaller than the one of the central calming zone and the reaction zone.

In a preferred embodiment, the reaction zone has a tubular structure with a constant cross section, with its longitudinal axis in the vertical position; and is provided at the distal end of the fluidised bed reactor, i.e. the bottom. The reaction zone comprises a plurality of inlet nozzles for introduction of reagents, i.e. alloy particles, ferric iron and an aqueous acidic solution.

In one embodiment, the reaction zone may optionally also incorporate an impeller that is attached to a motor by means of a rod, wherein the said impeller is a down flow type with variable speed control that can be operated either manually or automatically. In a preferred embodiment, the reaction zone comprises a plurality of vertical baffles placed diametrically opposite to each other and placed at a position between said inlet nozzles and the said impeller such that at least one baffle is placed on diametrically opposite ends of the reactor walls. In this embodiment, the impeller and the vertical baffles help in micro-level mixing of the reactants. The impeller action causes the noble metal-rich residue particles of favourable particle size and with reduced Co-, Ni- and/or Cu-content to rise up, whilst allowing the heavier alloy particles with higher Co-, Ni- and/or Cu-content to remain in the reaction zone until a sufficiently reduced particle size is achieved. The impeller improves reactor kinetics. The vertical baffles contribute towards ensuring the maximum mixing of the reactants within the reaction zone. The placement of the vertical baffles ensures that the reaction is limited to the reaction zone and does not extend into the zones above the reaction zone.

In a preferred embodiment, the calming zone has a tubular structure with a constant cross section, preferably equal to that of said reaction zone. The calming zone is in fluid communication with said reaction zone and has the reaction zone at its distal end and the overflow zone at its proximal end. The function of the calming zone is to achieve a non-turbulent liquid flow in which the noble metal-rich residue is in a fluidised condition and in which the unreacted alloy particles are in a non-fluidised condition. This allows the unreacted or insufficiently reacted alloy particles to return to the reaction zone. The calming zone may comprise a plurality of horizontal baffles placed in the central, proximal, and distal parts of the calming zone. In this embodiment, at least two of the provided horizontal baffles may be downward type of baffles with a centre flow aperture adapted to slow down the speed of the reactant mixture. In yet another embodiment, the provided central horizontal baffle is a conical type baffle with annular flow. In this embodiment, the placement of the horizontal baffles creates a curved flow path that allows for particles of a large size to settle down, while at the same time, allowing the upward flowing mixture to travel smoothly into the overflow zone.

In a preferred embodiment, the overflow zone has a tubular structure, with a cross section equal to that of the calming zone and the reaction zone, and is placed at the proximal end of the reactor. The overflow zone is provided with an outlet to receive (i) a Co-, Ni- and/or Cu-rich leach solution, and (ii) a noble metal-rich residue having a reduced Co-, Ni- and/or Cu-content formed in process step b.

In a preferred embodiment, the invention provides a process according to the first aspect, wherein a noble metal-rich residue of a predetermined purity is in a fluidised state in said fluidised bed reactor, and wherein said alloy particles are in a non-fluidised state in said fluidised bed reactor.

This can be easily achieved by adapting the feed flow rate of said acidic aqueous solution and said ferric iron. A sufficiently high feed flow rate will cause the smaller, lighter particles having a purity of noble metal above a predetermined purity to be fluidised; yet, the feed flow rate should be sufficiently low such that the larger, heavier particles having a purity of noble metal below said predetermined purity are not fluidised. The optimal feed flow can be easily determined by the skilled person, who is a chemical engineer with knowledge of fluidised bed type reactors.

In a preferred embodiment, the invention provides a process according to the first aspect, wherein said Co-, Ni- and/or Cu-rich leach solution and said noble metal-rich residue is separated from said alloy particles. The fluidised noble metal-rich residue of a predetermined purity is entrained with the Co-, Ni- and/or Cu-rich leach solution from the reaction zone to the calming zone. In the calming zone, a stable fluidisation of the noble metal-rich residue takes place, while any of the entrained but insufficiently purified alloy particles returns to the reaction zone under gravitational force. The stable, fluidised noble metal-rich residue entrained in the leach solution reaches the overflow zone in the reactor where it is evacuated from the reactor. Subsequently, the noble metal-rich residue is separated from the leached by filtration or decantation. Further washing of the noble metal-rich residue may take place.

In a preferred embodiment, the invention provides a process according to the first aspect, wherein said reaction zone is provided at the bottom section of said fluidised bed reactor, and wherein said alloy particles are fed to said reaction zone. This is advantageous because the alloy particles can reside in the lower zone of the reactor while the purified noble metal-rich residue is entrained with the leaching solution. Such a setup avoids that the purified noble metal-rich residue is further mixed with the non-purified alloy particles.

In a preferred embodiment, the invention provides a process according to the first aspect, wherein said reaction zone is provided at the bottom section of said fluidised bed reactor, and wherein said ferric iron is fed to said reaction zone. In a preferred embodiment, the invention provides a process according to the first aspect, wherein also said acidic aqueous solution is fed to said reaction zone. This is advantageous to allow for an optimal contact between the fed ferric iron, said acidic aqueous solution and the alloy particles fed to the reaction zone at the bottom of the fluidised bed reactor.

In a preferred embodiment, the invention provides a process according to the first aspect, wherein the redox potential is not measured during any of steps b. or c. The present process allows for operation under mild conditions, that is standard pressure and temperatures well below 100 °C as well as mild acidity. Oxidation of noble metals such as silver and gold is thereby significantly suppressed. Consequently, end-point detection of the reaction medium is less critical.

In a preferred embodiment, the invention provides a process according to the first aspect, wherein the redox potential of the leachate evacuated from the fluidised bed reactor is determined. Determination of the redox potential of the leachate allows for determining the extent of the reaction in the reaction zone of the fluidised bed reactor. Accordingly, the reactor feed flow rate can be adapted according to the composition of the leachate. More specifically, the ferric iron feed flow rate, the acidic aqueous solution feed flow rate as well as the alloy feed flow rate can be adapted according to the redox potential of the leachate. The skilled person is familiar with reactor engineering and knows how to adapt process conditions to obtain a desired outcome.

In a preferred embodiment, the invention provides a process according to the first aspect, wherein said alloy particles have an average particle size of less than 1000 µm, preferably between 50 µm and 750 µm, as determined according to ASTM E11. More preferably, said alloy particles have an average particle size of less than 500 µm, and even more preferably of less than 250 µm.Most preferably, said alloy particles have an average particle size of about 100 µm, 150 µm, 200 µm, 250 µm, or any value there in between. A smaller average particle size provides a greater contact surface with the reaction medium in the reaction zone. Accordingly, faster reaction kinetics are obtained. Said average particle size should however be sufficiently large to allow for straightforward filtration of the resulting noble metal rich residue recovered from the overflow zone and to allow for sufficiently high upwards flowrates.

In a preferred embodiment, the invention provides a process according to the first aspect, wherein said noble metal-rich residue has an average particle size of less than 500 µm, preferably between 5 µm and 300 µm, and more preferably between 10 µm and 250 µm, as determined according to ASTM E11. More preferably, said alloy particles have an average particle size of less than 250 µm, and even more preferably of less than 125 µm. Most preferably, said alloy particles have an average particle size of about 10 µm, 15 µm, 25 µm, 50 µm, or any value there in between. Said average particle size should be sufficiently large to allow for straightforward filtration of the noble metal rich residue from the leachate liquid.

In a preferred embodiment, the invention provides a process according to the first aspect, wherein step b. is performed at a temperature of between 30 °C and 80 °C, preferably between 40 °C and 60 °C. A reaction temperature below 100°C allows to perform the reaction at standard atmospheric pressure without the need of an autoclave reactor. This allows for straightforward determination of process parameters such as i.e. redox potential of the reaction medium. Most preferably, step b. is performed at a temperature of 40 °C, 45 °C, 50 °C, 55 °C, 60 °C, or any temperature there in between.

In a preferred embodiment, the invention provides a process according to the first aspect, wherein step b. is performed at atmospheric pressure. This avoid the need for using an autoclave reactor.
In a preferred embodiment, the invention provides a process according to the first aspect, wherein steps a. and b. are performed at atmospheric pressure.

In a preferred embodiment, the invention provides a process according to the first aspect, wherein said noble metal is selected from the group consisting of rhodium, iridium, palladium, platinum, silver and gold, preferably from the group consisting of silver and gold.

In a preferred embodiment, the invention provides a process according to the first aspect, further comprising the steps of:
d. electrowinning of the Co-, Ni- and/or Cu-rich leach solution, thereby obtaining Co-, Ni- and/or Cu-cathodes, and spent electrolyte rich in ferric iron; and
e. using said spent electrolyte rich in ferric iron in step b.

The spent electrolyte from step e. is thus advantageously used as a combined source of acidic solution and of ferric iron, for use in leaching step b. This allows ferric iron to be completely recycled within the process, which allows to easily control the reaction stoichiometry in step b.

In such processes comprising an electrowinning step, the molar ratio of said ferric iron provided in step b. to the total amount of Co, Ni and Cu in said alloy particles is preferably higher than 2.0, more preferably higher than 2.1, or even higher than 2.2. Higher molar ratios allow for faster oxidation kinetics. Also, the molar ratio of said ferric iron provided in step b. to the total amount of Co, Ni and Cu in said alloy particles is preferably not higher than 5, and more preferably not higher than 3.0. Most preferably, said molar ratio is about 2.25, 2.35, 2.45, 2.55, 2.65, 2.75, 2.85, 2.95, 3.0 or any value there in between. At such ratios, it was found that the Co, Ni and/or Cu oxidation kinetics are fast. Higher excesses of ferric iron should be avoided to avoid too large excesses of ferric iron being present in the Co-, Ni- and/or Cu-rich leach solution. Residual iron (III) in the leachate is preferably avoided as it may induce side reactions in the electrowinning process.

In normal operating condition, according to the invention, the total iron concentration could amount to up to 50 g/L and the total cobalt, nickel and/or copper concentration to up to 200 g/L. These limits are imposed by the solubility of the corresponding sulphate species in the acidic conditions that prevail in these unit operations. The acidity could be as high as 250 g/L of sulphuric acid, but one will normally limit this to about 120 g/L to avoid the precipitation of solids.

### EXAMPLES

The following examples are intended to further clarify the present invention and are nowhere intended to limit the scope of the present invention.

### EXAMPLE 1

Copper sulphate crystals, iron (III) sulphate crystals and sulphuric acid are added to water to form an aqueous solution containing 20 g/L (0.36 M) Fe³⁺, 5 g/L (about 0.08 M) Cu and 180 g/L (1.8 M) H₂SO₄. Approximately 2 litres of this electrolyte are charged to a glass beaker in which both heating and stirring means are provided. At a temperature of 60°C, comminuted Cu-Ag alloy is slowly added to the solution. The comminuted alloy contains (by weight) 89% Cu, 4.3% Ag, 0.9% Bi, 0.9% Pb, 0.5% Ni and several other minor impurities; all alloy particles are smaller than 500 µm.

Upon addition of the copper alloy, the redox potential of the solution starts to decrease because of the reduction of iron (III) to iron (II) by the metallic copper. Whenever the potential drops to below 300 mV versus Ag/AgCI, more solution is added to maintain the potential between 200 and 300 mV. As such, a molar ratio of ferric iron to Cu of 2.57 is maintained. As the leaching completes, the potential decrease slows down. The potential is then allowed to drop to about 170 mV. The solids are recovered by means of filtration on a Buchner. The leaching solution comprising ferrous iron and Cu²⁺ is collected.

Chemical analysis shows that the filtrate contains less than 1 mg/L Ag, which means that more than 99.9% of the silver remains in the residue. Analysis of the residue is performed by means of XRF. The residue is found to contain 3.5% Cu and 55% Ag, which correspond to a copper leach yield of more than 99.5%.

The collected leaching solution comprising ferrous iron and Cu²⁺ is further processed by electrowinning, resulting in a high purity copper electrode material and a ferric iron solution comprising sulphuric acid. The ferric iron solution comprising sulphuric acid is further used for the oxidation of a new batch of Cu-Ag alloy particles.

### EXAMPLE 2

An alloy comprising Ag in an amount of 32 wt.% and Cu in an amount of 65 wt.% is comminuted and processed according to the procedure described in Example 1.

Chemical analysis shows that less than 0.2 mg/L Ag is present in the filtrate of this test. The residue contains 4% Cu and 90% Ag. A mass balance calculation shows that in this case 98% of the copper is dissolved, while 99.9% of the silver is recovered in the residue.

### EXAMPLE 3

An alloy comprising Ag in an amount of 46 wt.% and Cu in an amount of 51 wt.% is comminuted and processed according to the procedure described in Example 1.

Chemical analysis shows that less than 1 mg/L Ag is present in the filtrate of this test. The residue contains 4.2% Cu and 92% Ag. A mass balance calculation shows that in this case 96% of the copper is dissolved, while 99.9% of the silver is recovered in the residue.

### EXAMPLE 4

An alloy comprising Ag in an amount of 4 wt.% and Co in an amount of 89 wt.% is comminuted and processed according to the procedure described in Example 1.

Chemical analysis shows that the filtrate contained less than 1 mg/L Ag, which means that more than 99% of the silver remains in the residue. The residue is found to contain less than 5 wt.% Co and 55 wt.% Ag, which correspond to a cobalt leach yield of more than 99%.

### EXAMPLE 5

An alloy comprising Ag in an amount of 46 wt.% and Ni in an amount of 51 wt.% is comminuted and processed according to the procedure described in Example 1.

Chemical analysis shows that less than 1 mg/L Ag is present in the leachate. The residue contains less than 5 wt.% Ni and 92 wt.% Ag. A mass balance calculation shows that more than 90% of Ni is dissolved, while 99.9 wt.% of the silver is recovered in the residue.

### EXAMPLE 6

An alloy comprising Au in an amount of 4 wt.% and Cu in an amount of 89 wt.% is comminuted and processed according to the procedure described in Example 1.

Chemical analysis shows that the filtrate contained less than 1 mg/L Au, which means that more than 99% of the gold remains in the residue. The residue is found to contain less than 5 wt.% Cu and 55 wt.% Au, which correspond to a copper leach yield of more than 99%.

### EXAMPLE 7

Copper sulphate crystals, iron (III) sulphate crystals and sulphuric acid are added to water to form an aqueous solution containing 20 g/L Fe³⁺, 5 g/L Cu and 180 g/L H₂SO₄ to form an oxidative feed solution. Alloy particles comprise 92 wt.% Cu, 4.8 wt.% Ag, 1.0 wt.% Pb, 0.52 wt.% Ni and other minor impurities (concentrations below 1%), such as Bi, Te, Se and/or Sb. All alloy particles are smaller than 500 µm and have a d₅₀ of 100 µm.

Said alloy particles are fed to a reaction zone of a fluidised bed reactor at 2.85 kg/h. The reactor used has a diameter of 10 cm, a column-length of 110 cm and the flow rate was set to 119 L/h, which leads to an upwards velocity of the fluid of 0.42 cm/s. Likewise, said oxidative feed solution comprising ferric iron is fed to a reaction zone of said fluidised bed reactor and is allowed to pass through and mix with said alloy particles under vigorous stirring. A molar ratio of ferric iron to Cu of 2.57 is maintained. To achieve a good Cu/Ag separation the feed rate of the alloy particles is controlled to maintain an operational reaction potential of 300 mV (measured versus Ag/AgCI) at the top of the column.

Purified silver particles of smaller diameter having a d₅₀ of 10 to 20 µm are entrained with the copper-rich leach solution and pass a calming zone in which unreacted particles are allowed to return to the reaction zone. The purified silver particles enter an overflow zone in the fluidised bed reactor where they are entrained with the leaching solution and filter off on a Buchner with sufficiently small pore size. Filtration rates of over 1500 L/m²h were achieved. The leaching solution which passed through the filter is collected and further processed by electrowinning.

Chemical analysis shows that the filtrate contained less than 1 mg/L Ag, which means that more than 99.9% of the silver remains in the residue. Said residue is found to contain 55% Ag and 3.5% Cu, which corresponds to an almost quantitative copper leach yield. Other elements found comprise Pb (> 10%), Te (> 10%), Se (> 7%), Ni (< 4%) and Sb (< 2%).

The collected leaching solution comprising ferrous iron and Cu²⁺ is further processed by electrowinning, resulting in a high purity copper electrode material and a ferric iron solution comprising sulphuric acid. The ferric iron solution comprising sulphuric acid is further used for the oxidation of Cu-Ag alloy particles.

### EXAMPLE 8

Copper sulphate crystals, iron (III) sulphate crystals and sulphuric acid are added to water to form an aqueous solution containing 20 g/L Fe³⁺, 5 g/L Cu and 180 g/L H₂SO₄ to form an oxidative feed solution. Alloy particles comprising 92 wt.% Cu, 4.8 wt.% Ag, 1.0 wt.% Pb, 0.52 wt.% Ni and other minor impurities (concentrations below 1%), such as Bi, Te and/or Sb, are provided with a d₅₀ of 100 µm.

The same process parameters as used in Example 7 are maintained, with the exception that the feed rate of leaching solution is varied, resulting in different velocities of the leaching solution through the reactor. At different velocities v [cm/s] of the leaching fluid, different concentrations of the leached metals in the leachate are obtained, expressed as fraction (wt.%) vs. feed:
a) at a velocity of v = 2.2 cm/s: Cu 40%, Ni 25%, Ag 0%, Pb 0%.
b) at a velocity of v = 1.3 cm/s: Cu 81%, Ni 61%, Ag 0%, Pb 0%.
c) at a velocity of v = 0.7 cm/s: Cu 89%, Ni 64%, Ag 0%, Pb 0%.

The results clearly show that good selectivity towards leaching of base metals such as copper and nickel from the base metal alloy is achieved. Higher purities in separated products are possible by using a longer leaching reactor.

### COMPARATIVE EXAMPLE 1

The traditional method for Cu dissolution from alloys uses O₂ as the oxidising agent, according to the following reaction:

Cu + H₂SO₄ + ½ O₂ → Cu²⁺ + SO4²⁻ + H₂O

A comminuted alloy with particle size below 500 µm comprising 89 wt.% Cu, 4.3 wt.% Ag, 0.9 wt.% Bi, 0.9 wt.% Pb, 0.5 wt.% Ni (and several other minor impurities) is dissolved in electrolyte with 200 g/L H₂SO₄ and 40 g/L Cu at 110°C in an autoclave. The oxygen flow to the reactor is regulated to maintain 450 kPa of overpressure. The leaching operation is considered finished when no more oxygen is required to maintain the 450 kPa overpressure (no more oxygen is consumed). This results in a leach solution of 120-135 g/L Cu, 15-30 g/L H₂SO₄ and up to 1200 mg/L of Ag.

This process results in a Cu recovery yield of 84 to 100% and a loss of silver in the leachate solution of up to 26%, relative to the total amount of silver fed to the reactor. Thus, it is clear that the present invention provides higher selectivity and strongly improved separation efficiency between the noble metal (Ag) and the base metal (Cu) in the alloy.

### COMPARATIVE EXAMPLE 2

The process according to Example 1 was repeated with 0.85 g/L (0.015 M) Fe³⁺ instead of 20 (0.36 M) g/L Fe³⁺ in presence of oxygen. Approximately 2 litres of the electrolyte is charged to a glass beaker in which both heating and stirring means are provided. The oxygen flow through the electrolyte medium is regulated at 80 L per hour per kg of electrolyte. At a temperature of 80°C, comminuted Cu-Ag alloy is slowly added to the solution and stirred for 3 hours. Upon filtration, analysis of the residue and filtrate shows that only 38% of copper and 0.1% of silver is leached.

This shows that lower amounts of Fe³⁺ and the presence of oxygen do not provide satisfactory leaching yields. In addition, ferric iron was provided in a sub-stoichiometric amount relative to the amount of copper in said alloy particles, i.e. 0.015 M Fe³⁺ relative to 0.08 M Cu. This shows that under these circumstances, oxygen is the oxidative agent and ferric iron is merely a catalyst.

## Claims

1. Process for separating noble metals from a Co-, Ni- and/or Cu-based metal alloy, comprising the steps of:
a. providing alloy particles comprising (i) Co, Ni and/or Cu, and (ii) at least one noble metal;
b. reacting Co, Ni and/or Cu in said alloy particles with an oxidizing agent in an acidic aqueous solution, thereby obtaining (i) a Co-, Ni- and/or Cu-rich leach solution, and (ii) a noble metal-rich residue having a reduced Co-, Ni- and/or Cu-content; and
c. separating said Co-, Ni- and/or Cu-rich leach solution from said noble metal-rich residue;
**characterized in that** said oxidizing agent comprises ferric iron, whereby said ferric iron is provided in a stoichiometric excess relative to the total amount of Co, Ni and Cu in said alloy particles.

2. Process according to claim 1, whereby said Co, Ni and/or Cu in said alloy particles are reacted with said oxidizing agent without addition of oxygen and/or hydrogen peroxide as oxidizing agents.

3. Process according to claim 1 or 2, whereby said oxidizing agent consists essentially of ferric iron.

4. Process according to any of claims 1 to 3, whereby a molar ratio of said ferric iron to a total amount of Co, Ni and Cu in said alloy particles is between 2.1 and 5.0.

5. Process according to any of claims 1 to 4, whereby Co, Ni and/or Cu in said alloy particles is reacted with ferric iron in a reaction zone of a fluidised bed reactor.

6. Process according to claim 5, whereby said reaction zone is provided at the bottom section of said fluidised bed reactor, and whereby said acidic aqueous solution comprising ferric iron is fed to said reaction zone.

7. Process according to claim 5 or 6, whereby said acidic aqueous solution flows through said fluidised bed reactor at a flow rate sufficient to entrain a noble metal-rich residue having a predetermined purity and insufficient to entrain a noble metal-rich residue having a purity lower than said predetermined purity.

8. Process according to any of claims 5 to 7, whereby said acidic aqueous solution flows through said fluidised bed reactor from a bottom section to a top section or overflow section.

9. Process according to any of claims 1 to 8, whereby said acidic aqueous solution comprises sulphuric acid and whereby said acidic aqueous solution comprises ferric iron and sulphuric acid in a molar ratio ferric iron to sulphuric acid of 0.1 to 0.5.

10. Process according to any of claims 1 to 9, whereby said Co-, Ni- and/or Cu-rich leach solution and said noble metal-rich residue are separated from alloy particles having a lower noble metal content.

11. Process according to any of claims 1 to 10, whereby said alloy particles are prepared by granulation of an alloy melt in water.

12. Process according to any one of claims 1 to 11, whereby a content of Co, Ni and/or Cu in said alloy particles is at least 85 wt.%, relative to the total weight of said alloy particles.

13. Process according to any one of claims 1 to 12, whereby said alloy particles has an average particle size of between 50 µm and 500 µm, as determined by ASTM E11.

14. Process according to any one of claims 1 to 13, whereby step b. is performed at a temperature of between 50 °C and 70 °C.

15. Process according to any one of claims 1 to 14, wherein said noble metal is selected from the group consisting of rhodium, iridium, palladium, platinum, silver and gold, preferably from the group consisting of silver and gold.
